# EUROPÄISCHE PATENTANMELDUNG

(11) **EP 1 995 416 A1**
(43) Veröffentlichungstag der Anmeldung: **26.11.2008**
(21) Anmeldenummer: 07003512.6
(22) Anmeldetag: 20.02.2007
(51) Int. Cl.: F01K 11/02, F28B 9/02, F01K 23/16, F01D 25/28, F01D 3/02

(54) **Dampfturbinenanlage, kombiniertes Gas- und Dampfturbinenkraftwerk sowie Dampfkraftwerk**

(71) Anmelder: SIEMENS AKTIENGESELLSCHAFT, 80333 München (DE)
(72) Erfinder: Winkler, Gottfried, 91074 Herzogenaurach (DE)

(57) **Zusammenfassung**

Eine Dampfturbinenanlage (2) mit mindestens zwei unmittelbar hintereinander auf einer gemeinsamen Welle (4) angeordneten, eine Niederdruckstufe (10) bildenden Niederdruck-Teilturbinen (14, 16) soll derart ausgelegt sein, dass sie mit besonders geringem Aufwand kostengünstig errichtet werden kann und dass insbesondere auch die baulichen Anforderungen an ein die Anlage umgebendes Gebäude und/oder an eine für Montage- und Servicearbeiten bereitgestellte Krananlage gering gehalten sind. Zu diesem Zweck ist erfindungsgemäß vorgesehen, dass die Niederdruck-Teilturbinen (14, 16) auf einem Bodenfundament (18) ruhen und jeweils mindestens eine horizontale Abströmung aufweisen, wobei die jeweilige Abströmung über einen Dampfdom (z. B. 38a, 38b, 42a, 42b) mit einem seitlich der jeweiligen Niederdruck-Teilturbine (14, 16) angeordneten Kondensator (z. B. 40a, 40b, 44a, 44b) verbunden ist.

## Beschreibung

Die Erfindung betrifft eine Dampfturbinenanlage mit mindestens zwei unmittelbar hintereinander auf einer gemeinsamen Welle angeordneten, eine Niederdruckstufe bildenden Niederdruck-Teilturbinen. Sie betrifft weiterhin ein kombiniertes Gas- und Dampfturbinenkraftwerk sowie ein Dampfkraftwerk mit einer derartigen Dampfturbinenanlage.

Bei einer kombinierten Gas- und Dampfturbinenkraftwerksanlage werden die aus einer Gasturbine abströmenden heißen Abgase zur Beheizung eines so genannten Abhitzedampferzeugers genutzt, in dem durch Verdampfung eines flüssigen Strömungsmediums der zum Betrieb einer Dampfturbine notwendige Dampf erzeugt wird. Die Gasturbine und die Dampfturbine dienen dabei in der Regel zum Antrieb eines oder mehrerer elektrischer Generatoren zur Erzeugung elektrischer Energie. Durch die Ausnutzung der im Abgasstrom der Gasturbine enthaltenen Restwärme lässt sich bei einer derart kombinierten Gas- und Dampfturbinenkraftwerksanlage ein besonders hoher Gesamtwirkungsgrad erzielen und somit Brennstoff einsparen, was nicht nur unter rein wirtschaftlichen Gesichtspunkten, sondern auch im Hinblick auf Belange des Umweltschutzes und der Schonung natürlicher Ressourcen eine immer größere Rolle spielt. Daneben existieren auch noch reine Dampfkraftwerksanlagen, bei denen der Dampf für die Dampfturbine in einem fossil beheizten Dampfkessel oder Dampferzeuger erzeugt wird.

Üblicherweise wird das zu verdampfende Strömungsmedium - in der Regel Wasser bzw. ein Wasser-Dampf-Gemisch - in einem Kreislauf geführt, der zur Reduzierung von Exergieverlusten bei der Wärmeübertragung mehrere Druckstufen - in der Regel zwei oder drei - aufweisen kann. Jeder dieser Druckstufen des Wasser-Dampf-Kreislaufs ist üblicherweise eine entsprechende Turbinenstufe oder Teilturbine der Dampfturbinenanlage zugeordnet, in der sich der einströmende Dampf unter Leistung von Arbeit vollständig oder teilweise entspannt. Beispielsweise kann es vorgesehen sein, den aus einer Hochdruck- oder Mitteldruckturbine abströmenden, dort auf Niederdruckniveau entspannten Dampf nach einer Zwischenüberhitzung im Dampfkessel einer Niederdruckturbine zuzuleiten und in dieser möglichst vollständig zu entspannen.

Für eine möglichst effektive Ausnutzung der im Niederdruckdampf enthaltenen Enthalpie wird eine derartige Niederdruck-Teilturbine üblicherweise im Kondensationsbetrieb mit möglichst niedrigem Kondensatordruck betrieben. Dazu ist die Abströmung der Turbine über einen auch als Dampfdom bezeichneten Abdampfkanal mit einem Kondensator verbunden, in dem beispielsweise eine Anzahl von zu Wärmetauscherflächen zusammengefassten, kaltes Kühlwasser führenden Rohrbündeln angeordnet ist. Beim Betrieb der Anlage kondensiert der in den Kondensator einströmende Abdampf außen an den Kühlrohren, wobei sich gegenüber der Umgebung ein Unterdruck ausbildet. Das im Kondensator zu erreichende Vakuum hängt dabei im Wesentlichen von der Ein- und Austrittstemperatur des Kühlwassers sowie von der Qualität des Wärmeübergangs in den einzelnen Rohren ab und kann bei günstigen Kühlwasserbedingungen auf unter 40 mbar fallen. Der Dampf wird dann nach verrichteter Expansionsarbeit ausgangsseitig gewissermaßen aus der Dampfturbine herausgesaugt.

Bei bestimmten Anlagenkonfigurationen und Betriebsparametern, insbesondere für einen Standort mit vergleichsweise kalten Umgebungsbedingungen und Frischwasserkühlung, sind besonders niedrige Druckverhältnisse im Kondensator im Bereich von ca. 25 mbar möglich. Um aufgrund der hohen spezifischen Dampfvolumina zu verhindern, dass die Dampfturbine "sperrt", kann es in derartigen Fällen zweckmäßig sein, eine zweite Niederdruck-Teilturbine mit eigenem Kondensator vorzusehen und diese in der Art einer Zwillingsaufstellung dampfseitig parallel zur ersten Niederdruck-Teilturbine zu schalten.

Ein mechanisch und konstruktiv relativ einfacher Aufbau der Anlage bei gleichzeitig effektiver Energieauskopplung wird dabei üblicherweise erreicht, indem die beiden Niederdruck-Teilturbinen unmittelbar hintereinander, das heißt ohne Zwischenschaltung anderer Turbinenstufen oder dergleichen, auf einer gemeinsamen Welle angeordnet sind (Reihenanordnung) und gemeinsam einen auf derselben Welle angeordneten Generator antreiben. Auf demselben Wellenstrang können beispielsweise auch eine Hochdruck- und eine Mitteldruck-Teilturbine oder eine kombinierte Hoch-/Mitteldruck-Teilturbine und/oder eine Gasturbine angeordnet sein, die sich gegebenenfalls mit Hilfe einer oder mehrerer Kupplungen bedarfsweise zuschalten oder abkuppeln lassen. Besonders zweckmäßig ist es bei einer derartigen Einwellenkonfiguration, den Generator mittig zwischen der Gasturbine und der die Teilturbinen umfassenden Dampfturbine anzuordnen. Daneben sind auch so genannte Mehrwellenanordnungen gebräuchlich, bei denen der Dampfturbinenstrang und der Gasturbinenstrang voneinander getrennt auf separaten Wellen in benachbarten Gebäudeabschnitten des Maschinenhauses sitzen, wobei sowohl der Gas- als auch der Dampfturbinenstrang einen eigenen Generator umfassen.

Bislang wurde bei derartigen Anlagen der Dampfturbosatz mit den beiden Niederdruck-Teilturbinen aus konstruktiven Gründen, vor allem wegen des begrenzten Platzangebotes im Maschinengebäude und wegen des erforderlichen Raumes für die Kühlwasseranschlüsse und Rohrauszugsräume der Kondensatoren, auf einem Hochfundament mit einer von Fundamentstützen getragenen oder abgestützten Tischplatte gelagert. Bei einer derartigen Hochaufstellung weisen die Niederdruck-Teilturbinen jeweils eine einseitige vertikale Abströmung nach unten auf, die über einen Dampfdom mit vertikaler Strömungsrichtung mit einem unterhalb des Turbinengehäuses "hängend" angeordneten Kondensator verbunden ist.

Zwar ist es auf diese Weise relativ einfach möglich, auch bei einer Hintereinander-Anordnung mehrerer Niederdruck-Teilturbinen auf einem Wellenstrang die kühlwasserseitigen Anbindungen unterzubringen, jedoch ist aufgrund der Hochaufstellung eine Gebäudeerhöhung sowie ein aufwändiges und teures Turbosatzfundament erforderlich. Speziell bei Gas- und Dampfturbinenkraftwerksanlagen, insbesondere bei solchen mit einer in einem gemeinsamen Maschinenhaus untergebrachten Gasturbinen-/Generator-Einheit, ergibt sich der Nachteil, dass das bisher für Anlagen mit einer einzigen Niederdruck-Teilturbine gemeinsame, vergleichsweise niedrige Maschinengebäude nicht mehr beibehalten werden kann. Durch die Erhöhung im Bereich des Dampfturbosatzes ergibt sich ein Absatz in der Decke des Gebäudes, durch den insbesondere der Einbau einer gemeinsamen, sowohl den Gasturbinen- als auch den Dampfturbinenbereich überspannenden Kranbahn für einen Montage- und Servicekran unmöglich gemacht wird. Andernfalls müsste das gesamte Gebäude durchgängig erhöht werden, was jedoch ausgesprochen kostenintensiv und nachteilig wäre.

Der Erfindung liegt daher die Aufgabe zugrunde, eine Dampfturbinenanlage der eingangs genannten Art anzugeben, die mit besonders geringem Aufwand kostengünstig errichtet werden kann, und bei der insbesondere auch die baulichen Anforderungen an ein die Anlage umgebendes Gebäude und/oder an eine für Montage- und Servicearbeiten bereitgestellte Krananlage gering gehalten sind. Des Weiteren sollen eine entsprechende kombinierte Gas- und Dampfturbinenkraftwerksanlage sowie ein Dampfkraftwerk mit einer derartigen Dampfturbinenanlage angegeben werden.

In Bezug auf die Dampfturbinenanlage wird die genannte Aufgabe erfindungsgemäß gelöst, indem die Niederdruck-Teilturbinen auf einem Bodenfundament ruhen und jeweils mindestens eine horizontale Abströmung aufweisen, wobei die jeweilige Abströmung über einen Dampfdom mit einem seitlich der jeweiligen Niederdruck-Teilturbine angeordneten Kondensator verbunden ist.

Die Erfindung geht von der Überlegung aus, dass bei einer gattungsgemäßen Dampfturbinenanlage zur Verringerung der erforderlichen Gebäudehöhe und zur Vereinfachung der Fundamentkonstruktion grundsätzlich eine möglichst bodennahe Aufstellung des Dampfturbosatzes angestrebt werden sollte. Wie nunmehr erkannt wurde, sollte dieser allgemeine Auslegungsgrundsatz entgegen der bislang vertretenen Auffassung und im Unterschied zu den bislang realisierten Anlagen auch in dem speziellen Fall befolgt werden, dass der Dampfturbosatz zwei oder mehrere unmittelbar hintereinander auf einer gemeinsamen Welle angeordnete Niederdruck-Teilturbinen umfasst, selbst wenn dadurch die kühlwasserseitige Anbindung der den Niederdruck-Teilturbinen dampfseitig nachgeschalteten Kondensatoren erschwert sein sollte. Aus diesem Grunde ist nunmehr eine Tiefaufstellung des Dampfturbosatzes auf einem Bodenfundament vorgesehen, wobei jede der Niederdruck-Teilturbinen mindestens eine horizontale seitliche Abströmung aufweist, die über einen Dampfdom mit einem seitlich der Turbine angeordneten, sich vorteilhafterweise auf dem Bodenfundament abstützenden Kondensator verbunden ist. Wie sich herausgestellt hat, sind auf diese Weise trotz des unter Umständen aufwändigeren Anschlusses der Kühlwasserleitungen an die Kondensatoren und trotz der vergrößerten seitlichen Ausdehnung der Anlage, die eine entsprechende Verbreiterung des im Maschinengebäude vorgesehenen Einbauraums erforderlich macht, insgesamt Kostenvorteile zu erwarten.

In einer ersten vorteilhaften Variante umfasst die Dampfturbinenanlage zwei jeweils eine beidseitige horizontale Abströmung aufweisende Niederdruck-Teilturbinen, wobei jede der Abströmungen über einen Dampfdom mit einem ausschließlich ihr zugeordneten Kondensator verbunden ist, und wobei jeweils die beiden auf einer Seite liegenden Dampfdome unterschiedlich lang sind. Somit ragt von den beiden auf einer Seite des Wellenstrangs angeordneten Kondensatoren einer weiter seitlich heraus als der andere, wodurch eine bessere Zugänglichkeit der jeweilige Rohrauszugsräume gegeben ist und zusätzlicher Platz für eine im Wesentlichen geradlinige, insbesondere parallel zur Welle ausgerichtete Verlegung von Anschlussleitungen und Kühlwasserrohren zur Verfügung steht. Besonders vorteilhaft ist dabei eine achs- bzw. wellensymmetrische Anordnung, bei der jeder der beiden Niederdruck-Teilturbinen zwei gleichlange Dampfdome zugeordnet sind. Dabei wird das Gewicht der Anlagenkomponenten gleichmäßig auf das Bodenfundament verteilt. Es ergibt sich auch der Vorteil von vier identischen, kompakten Kondensatormodulen.

Zur Optimierung der Platzverhältnisse kann zusätzlich zwischen den Niederdruck-Teilturbinen ein Distanzstück oder ein verlängertes Zwischensegment der Welle vorgesehen sein, z. B. mit einer Länge von typischerweise 2 bis 4 Metern. Alternativ oder zusätzlich kann ein vergrößerter Abstand zwischen den auf derselben Seite des Wellenstrangs liegenden Kondensatormodulen dadurch realisiert sein, dass zumindest einer der beiden Dampfdome, insbesondere der kürzere, nicht senkrecht zur Welle orientiert, sondern schräg herausgeführt ist. Eine derart schräge Dampfdomanordnung zur Schaffung ausreichender Platzverhältnisse hat den Vorteil, dass keine oder nur eine geringfügige Abstandsvergrößerung der beiden Niederdruck-Teilturbinen mittels zusätzlicher Zwischenwelle erforderlich ist.

In einer zweiten vorteilhaften Variante, die ebenfalls eine weitgehend symmetrische Gewichtsbelastung des Turbinenfundaments hervorruft, umfasst die Dampfturbinenanlage zwei jeweils eine beidseitige horizontale Abströmung aufweisende Niederdruck-Teilturbinen, wobei die jeweils auf einer Seite liegenden Abströmungen beider Niederdruck-Teilturbinen mit einem gemeinsamen Großraumkondensator verbunden sind. Insbesondere können dabei die Dampfdome alle gleichlang sein, so dass eine hohe Bauteil- oder Komponentenstandardisierung gegeben ist. Bei dieser Variante ist außerdem eine besonders einfache und flexible Kühlwasseranbindung - auf nur ein Kondensatormodul je Abströmungsseite - möglich.

Eine dritte vorteilhafte Variante sieht zwei jeweils eine einseitige horizontale Abströmung aufweisende Niederdruck-Teilturbinen vor, wobei die Abströmungen auf verschiedenen Seiten der Turbinenwelle angeordnet und jeweils über einen Dampfdom mit jeweils einem Kondensator verbunden sind.

Schließlich können bei einer vierten Variante zwei jeweils eine einseitige horizontale Abströmung aufweisende Niederdruck-Teilturbinen vorgesehen sein, wobei die beiden Abströmungen auf derselben Seite angeordnet und jeweils über einen Dampfdom mit einem gemeinsamen Großraumkondensator verbunden sind.

In besonders zweckmäßiger Ausgestaltung ist jede der Niederdruck-Teilturbinen zweiflutig ausgeführt, umfasst also zwei symmetrisch zu einer gemeinsamen Mitteleinströmung angeordnete, parallel zur Turbinenwelle verlaufende Strömungskanäle oder Expansionsstrecken, mit jeweils endseitig angeordneten Abströmräumen. Bei einer einseitigen seitlichen Abströmung sind die beiden Abströmräume dampfseitig über einen einseitig angeordneten gemeinsamen Dampfdom mit einem seitlich der Turbine angeordneten Kondensator verbunden; bei einer beidseitigen seitlichen Abströmung teilt sich der Abdampfstrom und strömt in zwei voneinander wegweisenden Dampfdomen zu den jeweils angeschlossenen Kondensatoren bzw. Kondensatorhälften. Diese Hälften sind zweckmäßigerweise am Tiefpunkt mit Kondensatverbindungen zu versehen, da die Kondensatpumpen üblicherweise an nur einer Hälfte angeschlossen sind.

Vorteilhafterweise ist der Dampfturbosatz Bestandteil einer kombinierten Gas- und Dampfturbinenkraftwerksanlage, wobei vorzugsweise die Niederdruck-Teilturbinen der Dampfturbinenanlage sowie ein Generator auf derselben Welle sitzen. In vorteilhafter Ausgestaltung umfasst der Dampfturbosatz ferner eine Hochdruck-Teilturbine und eine Mitteldruck-Teilturbine oder stattdessen eine kombinierte Hoch-/Mitteldruck-Teilturbine, die vorzugsweise auf der vom Generator abgewandten Seite vor der Niederdruckstufe auf der Welle der Dampfturbinenanlage angeordnet ist bzw. sind. Es handelt sich dabei vorzugsweise um eine so genannte Mehrwellen-Anordnung mit einer auf einer separaten Welle angeordneten Gasturbinen-/Generator-Einheit. Prinzipiell ist die bodennahe Anordnung eines Dampfturbosatzes mit mehr als einer Niederdruckstufe jedoch auch bei einer großen Einwellenanlage vorteilhaft, die bevorzugt in dieser Reihenfolge eine Gasturbine, einen mittig angeordneten Generator, gegebenenfalls eine Kupplung sowie eine die genannten Teilturbinen umfassende Dampfturbine auf einer gemeinsamen Welle aufweist.

Prinzipiell kann der Dampfturbosatz auch Bestandteil eines reinen Dampfkraftwerks sein, bei dem der zum Betrieb der Dampfturbine benötigte Dampf nicht in einem einer Gasturbine rauchgasseitig nachgeschalteten Abhitzedampferzeuger, sondern in einem mittels Brennern beheizten Dampfkessel erzeugt wird. Aufgrund der nunmehr vorgesehenen Tiefaufstellung des Dampfturbosatzes kann dann allerdings gegebenenfalls erforderlicher Anzapfdampf nicht in herkömmlicher Weise wie bei Hochaufstellung von unten aus der Dampfturbine geführt werden, sondern alternativ von der Seite oder von oben bei entsprechend abgewandelter konstruktiver Ausführung der Anzapfstellen.

Die mit der Erfindung erzielten Vorteile bestehen insbesondere darin, dass durch die Tiefaufstellung eines Dampfturbosatzes mit einer Mehrzahl von hintereinander auf einer gemeinsamen Welle angeordneten Niederdruck-Teilturbinen auf einem Bodenfundament ohne zusätzliche Tischplatte und Fundamentstützen bei entsprechend modifizierter Anordnung der abdampfseitig nachgeschalteten Kondensatoren und bei geeigneter Anpassung der Rohrleitungsanschlüsse für die Kühlwasserrohre die bislang bei einer Hochaufstellung erforderliche Gebäudeerhöhung um ca. 10 m entfallen kann. Insbesondere kann damit bei einer kombinierten Gas- und Dampfturbinenkraftwerksanlage ein durchgehend vergleichsweise niedriges Maschinengebäude ohne Höhenversatz zwischen dem der Dampfturbinenanlage zugeordneten Teil des Gebäudes und dem der Gasturbinenanlage zugeordneten Teil des Gebäudes erreicht werden (speziell bei Mehrwellen-Konfiguration), in dessen Deckenbereich eine durchgehende Kranbahn oder -schiene für einen gemeinsam für die Gas- und Dampfturbine nutzbaren Kran, etwa für die Ersterrichtung oder für Servicearbeiten, installierbar ist. Damit ist bei insgesamt niedrig gehaltenen Fertigstellungskosten eine hohe Flexibilität bei der Wartung der Anlage gewährleistet. Ferner ist das Turbinenfundament konstruktiv einfacher gehalten und kann schneller und kostengünstiger errichtet werden als bei bislang bekannten Anlagen. Auch bei einer möglichen Einwellen-Konfiguration ist mit der bodennahen Anordnung der Niederdruck-Teilturbinen grundsätzlich ein niedriges Maschinenhaus ohne hochgestellte Turbinentischplatte möglich.

Mehrere Ausführungsbeispiele der Erfindung werden anhand einer Zeichnung näher erläutert. Darin zeigen in jeweils schematischer Darstellung:
- FIG 1: eine Draufsicht auf einen Dampfturbinenstrang einer kombinierten Gas- und Dampfturbinenkraftwerksanlage mit zwei hintereinander auf einer gemeinsamen Welle angeordneten Niederdruck-Teilturbinen und zugehörigen Kondensatoren,
- FIG 2: den Dampfturbinenstrang gemäß FIG 1 im Längsschnitt,
- FIG 3: eine noch stärker schematisierte Darstellung der Draufsicht auf den Dampfturbinenstrang gemäß FIG 1, und
- FIG 4 bis 7: jeweils eine Draufsicht auf einen Dampfturbinenstrang ähnlich wie in FIG 1 oder FIG 3, jedoch mit jeweils alternativer Anordnung der Kondensatoren.

Gleiche Teile sind in allen Figuren mit denselben Bezugszeichen versehen.

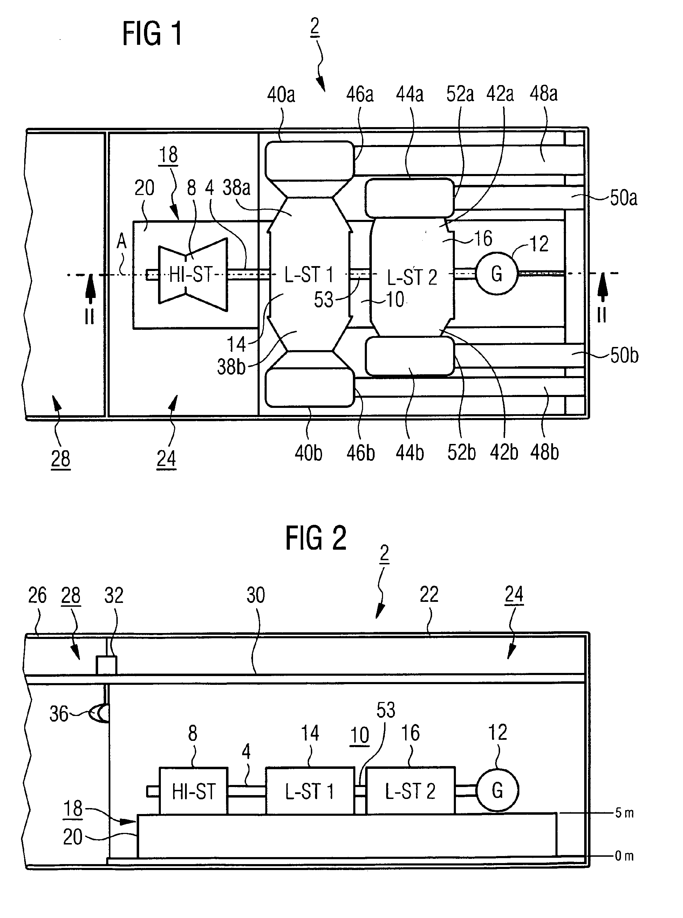

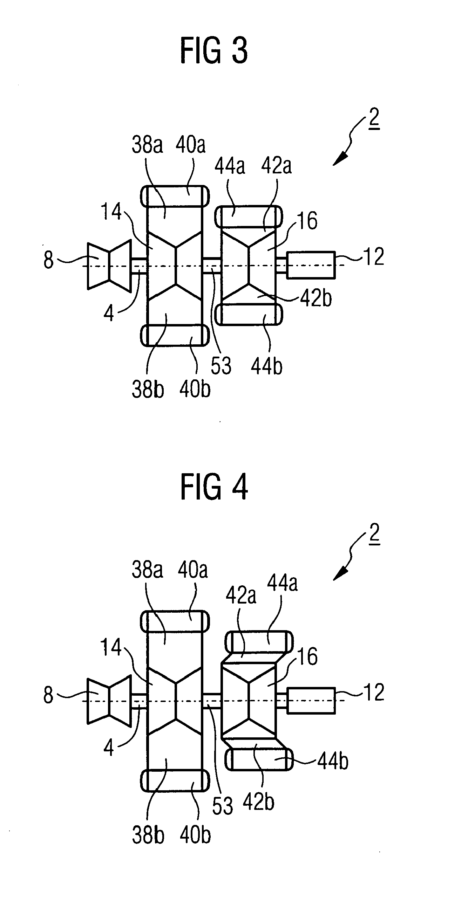

Die in FIG 1 und FIG 3 schematisch in einer Draufsicht und in FIG 2 im Längsschnitt dargestellte Dampfturbinenanlage 2 ist Bestandteil einer kombinierten Gas- und Dampfturbinenkraftwerksanlage, bei der der zum Betrieb der Dampfturbinenanlage 2 notwendige Dampf in einem einer Gasturbine rauchgasseitig nachgeschalteten Abhitzedampferzeuger erzeugt wird. Der Gasturbinenstrang bzw. die Gasturbinenstränge sind im Beispiel in der Art einer Mehrwellenanlage separat in einer zweiten Gebäudehälfte untergebracht, in FIG 1 jedoch nicht mehr dargestellt. Die Dampfturbinenanlage 2 umfasst auf einer gemeinsamen Welle 4 von links nach rechts eine Hoch-/Mitteldruckstufe mit einer kombinierten Hoch-/Mitteldruck-Teilturbine 8, eine Niederdruckstufe 10 und einen Generator 12. In zweckmäßiger Anpassung an einen Standort mit vergleichsweise kalten Umgebungsbedingungen umfasst die Niederdruckstufe 10 zwei auf der Welle 4 in Reihe angeordnete, dampfseitig parallel geschaltete Niederdruck-Teilturbinen 14 und 16, die jeweils zweiflutig ausgeführt sind.

In Abkehr von der bislang üblichen Bauweise mit einem Tischfundament sind der die Teilturbinen 8, 14, 16 umfassende Dampfturbosatz und der Generator 12 der Dampfturbinenanlage 2 vergleichsweise bodennah auf einem Bodenfundament 18 angeordnet. Im Ausführungsbeispiel beträgt die Höhe der Fundamentplatte 20 über dem Grund etwa 5 m. Gegenüber einer bislang üblichen Hochaufstellung, bei der sich der Dampfturbosatz ca. 12 m bis 15 m über Grund auf einer Tischplatte eines Tischfundaments befindet, ist mit einer derartigen Tiefaufstellung eine beträchtliche "Höhenersparnis" verbunden, so dass die Decke 22 des Dampfturbinengebäudes 24 entsprechend niedrig angeordnet sein kann, insbesondere auf derselben Höhe wie die Decke 26 des Gasturbinengebäudes 28. Unterhalb der Decken 22, 26 ist eine sowohl den Dampfturbinenstrang als auch den Gasturbinenstrang überspannende Kranbahn 30 angeordnet, entlang derer eine Laufkatze 32 mit einer Hubvorrichtung 36 bewegbar ist. Mit Hilfe dieser gemeinsamen Krankonstruktion ist eine besonders flexible Durchführung von Montage- und Servicearbeiten sowohl im Dampfturbinengebäude 24 als auch im Gasturbinengebäude 28 möglich, wobei insbesondere schwere Anlagenkomponenten oder dergleichen ohne Zwischenabsetzen aus dem einen Gebäude in das andere transportiert werden können.

Um weiterhin eine kostspielige "Unterkellerung" der beiden Niederdruck-Teilturbinen 14, 16 bzw. eine Aushöhlung der Fundamentplatte 20 zu vermeiden, wird von der bislang üblichen hängenden Anordnung der den Niederdruck-Teilturbinen 14, 16 abdampfseitig nachgeschalteten Kondensatoren Abstand genommen. Stattdessen ist nunmehr eine seitliche Anordnung der Kondensatoren neben der jeweiligen Niederdruck-Teilturbine 14, 16 vorgesehen.

Bei der in FIG 1 bis FIG 3 dargestellten ersten Variante weist jede der beiden Niederdruck-Teilturbinen 14 bzw. 16 eine beidseitige horizontale Abströmung auf (die beiden Fluten der jeweiligen Niederdruck-Teilturbine 14 bzw. 16 werden hier als eine Einheit betrachtet). Die beiden Abströmungen der ersten Niederdruck-Teilturbine 14 sind über Dampfdome 38a, 38b mit Kondensatoren 40a, 40b verbunden; die beiden Abströmungen der zweiten Niederdruck-Teilturbine 16 sind über Dampfdome 42a, 42b mit Kondensatoren 44a, 44b verbunden. Die Dampfdome 38a, 38b der Niederdruck-Teilturbine 14 sind länger als die Dampfdome 42a, 42b der Niederdruck-Teilturbine 16, so dass die den Kondensatoren 44a, 44b zugewandten bzw. in Richtung auf den Generator 12 hin orientierten Anschlussbereiche oder Rohrauszugsräume 46a, 46b der Kondensatoren 40a, 40b problemlos zugänglich sind und eine geradlinige Verlegung der Kühlwasserleitungen 48a, 48b für die Kondensatoren 40a, 40b parallel zur Welle 4 ermöglicht ist. Die Kühlwasserleitungen 50a, 50b für die Kondensatoren 44a, 44b verlaufen parallel zur Welle 4 hin versetzt und sind im Bereich der Rohrauszugsräume 52a, 52b an die Kondensatoren 44a, 44b angeschlossen. Damit ist die seitliche Ausdehnung der Dampfturbinenanlage 2 (senkrecht zur Richtung der Welle 4) trotz der seitlichen Anordnung der Kondensatoren 40a, 40b, 44a, 44b insgesamt vergleichsweise gering gehalten. Durch die achssymmetrische Anordnung (Achse A) wird das Bodenfundament 18, das nicht nur die Turbinenstufen 8, 14, 16 und den Generator 12, sondern auch die Kondensatoren 40a, 40b, 44a, 44b trägt, gleichmäßig und symmetrisch belastet. Um ausreichend Platz für die Anordnung der Kondensatormodule zu schaffen, kann ein Wellenzwischenstück 53 zur Vergrößerung des Abstands zwischen den Niederdruck-Teilturbinen 14 und 16 vorgesehen werden.

Die schematisch in FIG 4 dargestellte Abwandlung der ersten Variante unterscheidet sich insofern von der Ausgangsversion gemäß FIG 3, als die kürzeren Dampfdome 42a, 42b nicht senkrecht von der Welle 4 wegweisen, sondern derart schräg angeordnet sind, dass der Abstand zwischen den Kondensatoren 40a und 44a bzw. zwischen den Kondensatoren 40b und 44b vergrößert ist und damit die platzmäßigen Rahmenbedingungen zur Anordnung der Kondensatoren 40a, 40b, 44a, 44b verbessert sind. Auf ein Wellen-Zwischenstück 53 zur Vergrößerung des Abstands zwischen den beiden Niederdruck-Teilturbinen 14 und 16 kann bei dieser Variante unter Umständen verzichtet werden, so dass in dieser Hinsicht die bisherige Turbosatzsatzkonstruktion mit der Turbinen-/Generator-Welle 4 unberührt bleiben kann.

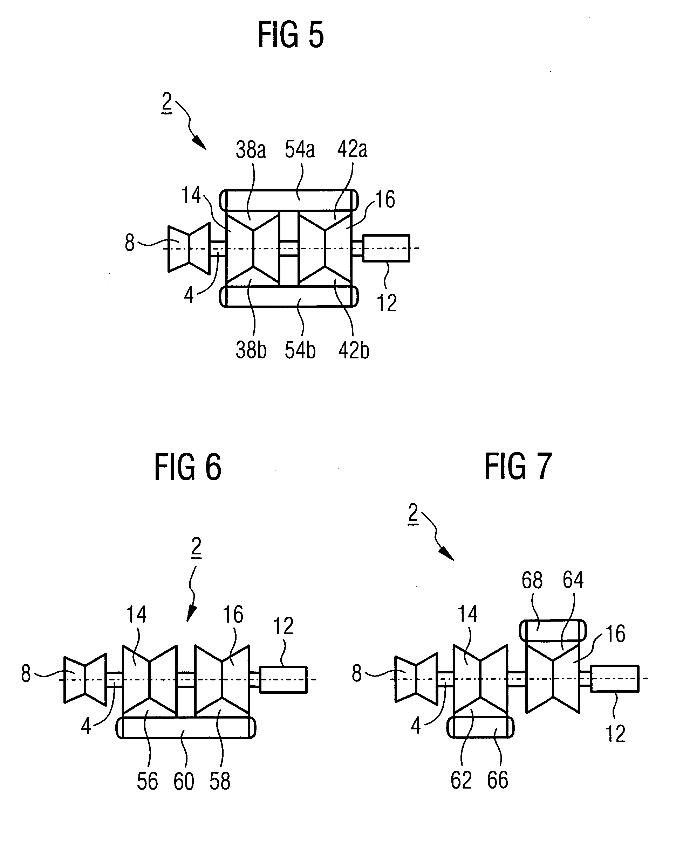

Bei einer weiteren Variante gemäß FIG 5 sind anstelle individueller Kondensatoren für jede der Abströmungen gemeinsame Großraumkondensatoren 54a, 54b für die auf derselben Seite der Welle liegenden Abströmungen vorgesehen. Das heißt, die jeweils an die erste horizontale Abströmung der Niederdruck-Teilturbinen 14, 16 angeschlossenen, gleich langen Dampfdome 38a, 42a münden ausgangsseitig in denselben, seitlich der Niederdruck-Teilturbinen 14, 16 angeordneten und mit seiner Längsseite parallel zur Welle 4 orientierten Großraumkondensator 54a. Auf der anderen Seite der Welle 4 sind spiegelbildlich der an die zweite Abströmung der Niederdruck-Teilturbine 14 angeschlossene Dampfdom 38b und der an die zweite Abströmung der Niederdruck-Teilturbine 16 angeschlossene Dampfdom 42b angeordnet, die in den gemeinsamen Großraumkondensator 54b münden.

Bei der Ausführungsform gemäß FIG 6 weisen die beiden Niederdruck-Teilturbinen 14, 16 jeweils nur eine einseitige horizontale Abströmung auf, wobei beide Abströmungen auf derselben Seite der Welle 4 liegen und über einen jeweils zugeordneten Dampfdom 56, 58 mit einem gemeinsamen Großraumkondensator 60 verbunden sind.

Schließlich ist auch die in FIG 7 dargestellte Variation denkbar, bei der die beiden Niederdruck-Teilturbinen 14, 16 ähnlich wie bei der Variante gemäß FIG 6 jeweils eine einseitige horizontale Abströmung aufweisen, die nunmehr jedoch auf verschiedenen Seiten der Welle 4 liegen. Jede der beiden Abströmungen ist über einen Dampfdom 62 bzw. 64 mit einem Kondensator 66 bzw. 68 verbunden, der gegebenenfalls für größere Dampfmengen als die in den FIG 1,2 und 3 gezeigten Einzelkondensatoren ausgelegt und daher entsprechend großvolumiger dimensioniert ist.

## Patentansprüche

1. Dampfturbinenanlage (2) mit mindestens zwei unmittelbar hintereinander auf einer gemeinsamen Welle (4) angeordneten, eine Niederdruckstufe (10) bildenden Niederdruck-Teilturbinen (14, 16), die auf einem Bodenfundament (18) ruhen, und die jeweils mindestens eine horizontale Abströmung aufweisen, wobei die jeweilige Abströmung über einen Dampfdom (z. B. 38a, 38b, 42a, 42b) mit einem seitlich der jeweiligen Niederdruck-Teilturbine (14, 16) angeordneten Kondensator (z. B. 40a, 40b, 44a, 44b) verbunden ist.

2. Dampfturbinenanlage (2) nach Anspruch 1 mit zwei jeweils eine beidseitige horizontale Abströmung aufweisenden Niederdruck-Teilturbinen (14, 16), wobei jede der Abströmungen über einen Dampfdom (z. B. 38a, 38b, 42a, 42b) mit einem ausschließlich ihr zugeordneten Kondensator (z. B. 40a, 40b, 44a, 44b) verbunden ist, und wobei jeweils die beiden auf einer Seite liegenden Dampfdome (38a, 42a bzw. 38b, 42b) unterschiedlich lang sind.

3. Dampfturbinenanlage (2) nach Anspruch 2, wobei jeder der beiden Niederdruck-Teilturbinen (14, 16) zwei gleich lange Dampfdome (38a, 38b bzw. 42a, 42b) zugeordnet sind.

4. Dampfturbinenanlage (2) nach Anspruch 1 mit zwei jeweils eine beidseitige horizontale Abströmung aufweisenden Niederdruck-Teilturbinen (14, 16), wobei die jeweils auf einer Seite liegenden Abströmungen beider Niederdruck-Teilturbinen (14, 16) mit einem gemeinsamen Großraumkondensator (54a, 54b) verbunden sind.

5. Dampfturbinenanlage (2) nach Anspruch 1 mit zwei jeweils eine einseitige horizontale Abströmung aufweisenden Niederdruck-Teilturbinen (14, 16), wobei die beiden Abströmungen auf derselben Seite angeordnet und jeweils über einen Dampfdom (56, 58) mit einem gemeinsamen Großraumkondensator (60) verbunden sind.

6. Dampfturbinenanlage (2) nach Anspruch 1 mit zwei jeweils eine einseitige horizontale Abströmung aufweisenden Niederdruck-Teilturbinen, wobei die Abströmungen auf verschiedenen Seiten der Welle (4) angeordnet und jeweils über einen Dampfdom (62, 64) mit einem Kondensator (66, 68) verbunden sind.

7. Dampfturbinenanlage (2) nach einem der Ansprüche 1 bis 6, wobei die jeweilige Niederdruck-Teilturbine (14, 16) zweiflutig ausgebildet ist.

8. Gas- und Dampfturbinenkraftwerksanlage mit einer Dampfturbinenanlage (2) nach einem der Ansprüche 1 bis 7.

9. Gas- und Dampfturbinenkraftwerksanlage nach Anspruch 8, deren Dampfturbinenanlage (2) ferner eine Hochdruck-Teilturbine und eine Mitteldruck-Teilturbine oder stattdessen eine kombinierte Hoch-/Mitteldruck-Teilturbine (8) umfasst, die mit den Niederdruck-Teilturbinen (14, 16) und mit einem Generator (12) auf einer gemeinsamen Welle (4) sitzen/sitzt.

10. Gas- und Dampfturbinenkraftwerksanlage nach Anspruch 8 oder 9, wobei ein oder mehrere Gasturbinen-/Generator-Stränge auf einer oder mehreren von der Welle (4) der Dampfturbinenanlage (2) separaten Wellen angeordnet sind.

11. Gas- und Dampfturbinenkraftwerksanlage nach Anspruch 8 oder 9, wobei die Niederdruck-Teilturbinen (14, 16) und gegebenenfalls sonstige Teilturbinen der Dampfturbinenanlage (2), ein Generator und eine Gasturbine auf einer gemeinsamen Welle (4) sitzen.

12. Gas- und Dampfturbinenkraftwerksanlage nach Anspruch 11, bei der in dieser Reihenfolge eine Gasturbine, ein Generator und die Dampfturbinenanlage (2) auf der gemeinsamen Welle (4) angeordnet sind.

13. Dampfkraftwerk mit einer Dampfturbinenanlage (2) nach einem der Ansprüche 1 bis 7.
